# EUROPEAN PATENT APPLICATION

(11) **EP 1 333 687 A1**
(43) Date of publication of application: **06.08.2003**
(21) Application number: 02290239.9
(22) Date of filing: 01.02.2002
(51) Int. Cl.: H04N 13/00

(54) **Autostereoscopic display apparatus and image capturing device**

(71) Applicant: Thomson Licensing S.A., 92100 Boulogne-Billancourt (FR)
(72) Inventor: Chikazawa, Yoshiharu, Yokohama 221-0073 (JP)
(74) Representative: Ruellan-Lemonnier, Brigitte

(57) **Abstract**

The invention concerns a three dimensional (3D) display apparatus of the integral photography type comprising an array (32) of lenses (L) and an array (30) of points representing the image to be displayed, this array of points comprising a set of subarrays (SP₁, SP_{i+1...}), each subarray being associated to a corresponding lens, and each point of each subarray containing an information about a point of the 3D image to be displayed, the distance between each subarray and the associated lens being equal to the focal length of that lens,

This apparatus comprises masking elements (Rᵢ₋₁, Rᵢ, Rᵢ₊₁) which isolate each couple comprising a subarray of points and the associated lens from other couples in such a way that substantially only the rays coming from the subarray pass through the associated lens.

## Description

The invention relates to an improvement to a three dimensional (3D) display of the integral photography (IP) type. It relates also to an image capturing apparatus of the IP type.

For the display of static or dynamic 3D images, only the holographic method and the integral photography method are such that, on one hand, the viewer does not need to wear glasses and, on the other hand, the position of the eyes with respect to the display is not critical in order to obtain a correct 3D image.

Compared to the holographic method, the integral photography has the advantage of a greater simplicity.

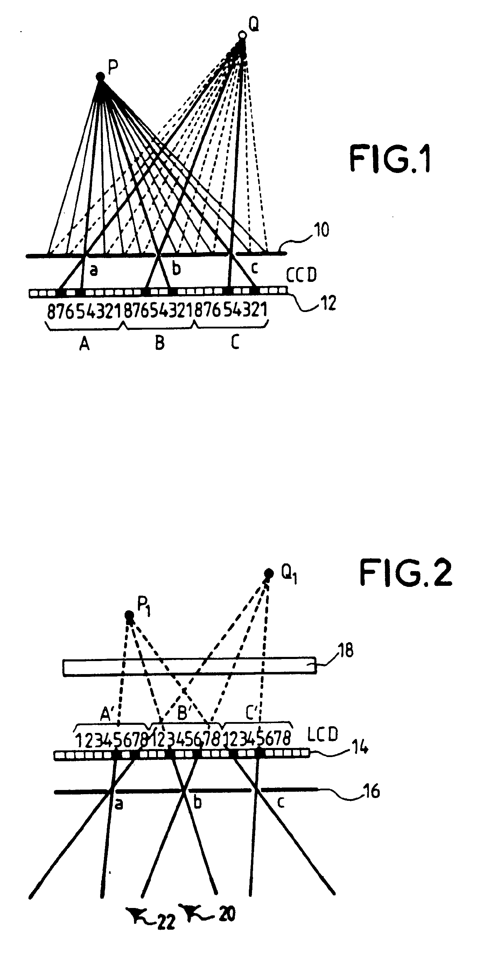

This known integral photography method will be explained herein after with reference to figure 1 and figure 2.

Figure 1 shows the principle of image capturing. The image capturing equipment comprises an array 10 of holes (or apertures) or lenses a, b, c ... At a given distance d of this array 10 is provided a set 12 of detectors A, B, C ... such as CCDs.

Each of those detectors has a predetermined number of detecting elements; this predetermined number is 8 in this simplified example. To each detecting element corresponds a pixel of a flat surface display (for example a liquid crystal display LCD) 14 of the image-reproducing device represented on figure 2. When a CCD detecting element receives light, the corresponding display pixel becomes transparent with a transmission coefficient which depends on the light intensity received by the CCD element.

In the example shown on figure 1 an object point P illuminates the detector elements A5, B3, C2 and the object point Q illuminates the detector elements A7, B6 and C5.

The correspondence between CCD elements and display pixels is such that to each CCD detector A, B, C ... corresponds a reproducing section A', B', C' and the order of the pixels in each reproducing section (A' for example) is inverted with respect to the order of the CCD elements in the corresponding (A) CCD detector. For example on figure 1 the CCD element A1 is on the right part of CCD detector A and, on figure 2, the corresponding pixel element A'1 is on the left part of this section.

The control of display 14 from signals provided by CCD 12, including the inversion, is realized by a processor not shown on figures 1 and 2.

The reproducing apparatus comprises an array 16 of holes or apertures, or lenses (passive array) corresponding to the array 10 of the image-capturing device. This array 16 is associated to the flat surface display 14 and to a light source 18 in such a way that light emitted by source 18 crosses the display 14 and, afterwards, the holes of array 16. If the array 16 is identical to the array 10 of the capturing device and if the inverted relative positions of pixel elements A'1, A'2, ..., B'1, B'2, ... are the same as the relative positions of CCD element, A1, A2, ... B1, B2, ... the distance d between array 16 and display 14 is equal to the distance between array 10 and CCD 12.

The light rays A'5-a, B'3-b, and C'2-c converge virtually to point P₁. The light rays A'7a, B'6b and C'5c converge virtually to point Q1. The respective positions of points P₁ and Q₁ are exactly the same as the respective positions of original points P and Q. In other words the integral photography 3D display provides a true 3D image of the original object if there is perfect correspondence between detecting elements and corresponding pixels of flat display, for example LCD 14.

The invention relates to an improvement of an image capturing device and of a display device wherein the arrays 10 and 16 are arrays of small lenses which are such that the distance between the lenses 10 and the detectors 12 (for an image capturing device) is equal to the focal length of the lenses and, in the same way for a display device, the distance between the lenses 16 and the imaging plane 14 is equal to the focal length of lenses 16.

In this way, for a display device, the rays coming from a given pixel, for instance A'8 (figure 2), have all the same direction because the corresponding pixel is in a focal plane of the corresponding lens.

In the same way for an image capturing device (fig 1) a given CCD detector, for instance A5, captures only the light rays having only one direction.

However it has been observed that, in spite of this distance between the lenses and the plane of the CCDₛ or of the LCDₛ, the images are not completely sharp.

The invention originates from the observation that, for display devices, the blurring of the image is caused by the fact that a plurality of light rays pass through each pixel and the light rays from this pixel may impinge on lenses which are not associated to this pixel. For instance light rays coming from B'3 may impinge on the lens c. Therefore these inclined light rays will not have the same direction than those passing through the lens b, i.e. they will not be seen as coming from the virtual point P₁.

In order to avoid such blurring effect the integral photography display device according to the invention comprises masking screens between the pixel surface and the lens surface which prevent that light rays coming from each subset of pixels impinge on an other lens than the lens associated to this subset of pixels.

In a preferred embodiment the masking screens are separators between the pixel plane and the lens plane. These masking screen separators may be simple ribs which reinforce the structure formed by the pixel (LCD) plane and the lens plane.

In brief, the invention concerns generally a three dimensional display apparatus of the integral photography type comprising an array of lenses and an array of points representing the image to be displayed, this array of points comprising a set of subarrays, each subarray being associated to a corresponding lens, and each point of each subarray containing an information about a point of the 3D image to be displayed, the distance between each subarray and the associated lens being equal to the focal length of that lens.

This apparatus comprises masking elements which isolate each couple comprising a subarray of points and the associated lens from other couples in such a way that substantially only the rays coming from the subarray pass through the associated lens.

In an embodiment, the array representing the image is on a first plate and the array of lenses form a second plate, and the masking elements comprise separators between the first and the second plates. In this embodiment, the separators may comprise ribs substantially perpendicular to the first and second plates. In that case, two sets of ribs may be provided, one set having a given direction and the other set a perpendicular direction.

The separators may be such that they reinforce the structure of the first and second plates.

The invention concerns also a three dimensional image capturing device of the integral photography type comprising an array of lenses and an array of detecting points, this array of detecting points comprising a set of subarrays, each subarray being associated to a corresponding lens, and each point of each array detecting an information about a point of the 3D image to be captured, the distance between each subarray and the associated lens being equal to the focal length of that lens. This device comprises masking elements which isolate each couple couprising a subarray of detecting points and the associated lens from other couples in such a way that substantially only the rays coming from the lens impinge on corresponding detecting points of the associated subarray.

In an embodiment, the array of detecting points is on a first plate and the array of lenses form a second plate, and the masking elements comprise separators between the first and the second plates. In this embodiment, the separators may comprise ribs substantially perpendicular to the first and second plates. In that case, two sets of ribs may be provided, one set having a given direction and the other set a perpendicular direction.

The separators may be such that they reinforce the structure of the first and second plates.

Other features and advantages of the invention will appear with the description of certain of its embodiments, this description being made in connection with the drawings wherein :
figure 1, already described, represents the principle of an image capturing device of the integral photography type,
figure 2, already described, represents the principle of a display device of the integral photography type,
figure 3, is a schematic drawing of one portion of an embodiment of a display device according to the invention, and
figure 4, is an isometric view of a portion of a display device according to the invention.

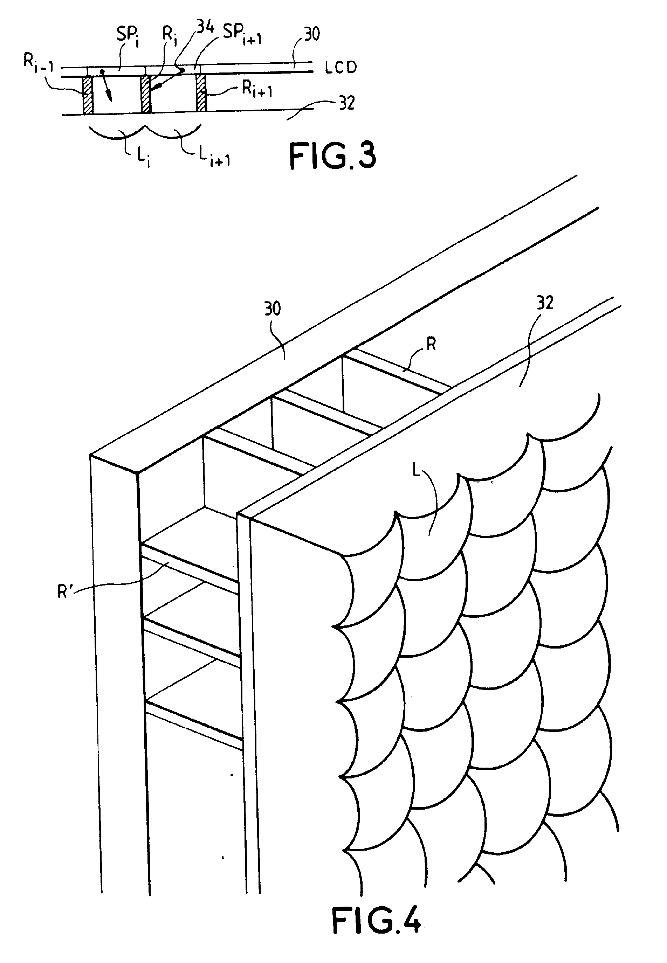

In the embodiment represented on fig 3, the LCD Plate 30 is, like the embodiment represented on fig 2, subdivided into subsets of pixels, each subset comprising for instance eight pixels. On fig 3 only two subsets SPᵢ and SPi+i have been represented. To each subset SPᵢ and SPᵢ₊₁... is associated a lens Lᵢ, Lᵢ₊₁.. and, like in fig 2, the distance between the plane 30 and the lenses is equal to the common focal length of the lenses which form a plate 32.

According to the invention, separators in form of ribs R are provided for separating all the couples of pixel subsets + lens (SPᵢ, Lᵢ), (SPᵢ₊₁,Lᵢ₊₁).... These ribs are perpendicular to the plates 30 and 32 and at the borders between subsets of pixels. On fig 3, three ribs Rᵢ₋₁, Rᵢ and Rᵢ₊₁ have been represented.

The separators R have the function of masks which isolate one couple from the other couples. For instance the lens Lᵢ will only receive light rays from subset SPᵢ and not from the neighboring subset SPᵢ₊₁ because the light ray coming from a pixel 34 of tis subset SPᵢ₊₁ will be stopped by the rib Ri.

The ribs represented on fig 3 prevent the light rays coming from subsets of pixels on the right or on the left of each subset to interfere with the associated lens. However such ribs may not prevent the interference from subsets of pixels which are in front or behind (the reference being the plane of the drawing) the corresponding subset. It is the reason why it is preferable to provide the device with perpendicular ribs as represented on fig 4. In this embodiment each subset of pixels is isolated, from the other subsets by four ribs.

In this example, the plane 32 is a "fly eye" lens sheet wherein to each individual lens are associated 8 line segments, each having 8 pixels. Therefore, a subset of pixels has 8 x 8 pixels and each subset is isolated by 4 ribs: 2 vertical ribs R and 2 horizontal ribs R'.

In both embodiments, the ribs may be formed integrally with the plane 30 and/or 32. Moreover these ribs are separators which provide an accurate distance between the plates 30 and 32. They also reinforce the structure formed by the couple of plates 30 and 32.

## Claims

1. A three dimensional (3D) display apparatus of the integral photography type comprising an array (32) of lenses (L) and an array (30) of points representing the image to be displayed, this array of points comprising a set of subarrays (SPᵢ, SP_{i+1...}), each subarray being associated to a corresponding lens, and each point of each subarray containing an information about a point of the 3D image to be displayed, the distance between each subarray and the associated lens being equal to the focal length of that lens,
wherein said apparatus comprises masking elements (R, R') which isolate each couple comprising a subarray of points and the associated lens from other couples in such a way that substantially only the rays coming from the subarray pass through the associated lens.

2. A three dimensional (3D) display apparatus according to claim 1 wherein the array representing the image is on a first plate (30) and the array of lenses form a second plate (32), and wherein the masking elements comprise separators between the first and the second plates.

3. A three dimensional (3D) display apparatus according to claim 2 wherein the separators comprise ribs substantially perpendicular to the first and second plates.

4. A three dimensional (3D) display apparatus according to claim 3 comprising two sets of ribs, one set having a given direction and the other set a perpendicular direction.

5. A three dimensional (3D) display apparatus according to any of claims 2-4 wherein the separators are such that they reinforce the structure of the first and second plates.

6. A three dimensional (3D) image capturing device of the integral photography type comprising an array of lenses and an array of detecting points, this array of detecting points comprising a set of subarrays, each subarray being associated to a corresponding lens, and each point of each array detecting an information about a point of the 3D image to be captured, the distance between each subarray and the associated lens being equal to the focal length of that lens,
wherein said device comprises masking elements which isolate each couple couprising a subarray of detecting points and the associated lens from other couples in such a way that substantially only the rays coming from the lens impinge on corresponding detecting points of the associated subarray.

7. A device according to claim 6 wherein the array of detecting points is on a first plate and the array of lenses form a second plate, and wherein the masking elements comprise separators between the first and the second plates.

8. A device according to claim 7 wherein the separators comprise ribs substantially perpendicular to the first and second plates.

9. A device according to claim 8 comprising two sets of ribs, one set having a given direction and the other set a perpendicular direction.

10. A device according to any of claims 7-9 wherein the separators are such that they reinforce the structure of the first and second plates.
